# EUROPÄISCHE PATENTANMELDUNG

(11) **EP 4 790 033 A1**
(43) Veröffentlichungstag der Anmeldung: **12.08.2026**
(21) Anmeldenummer: 25156942.2
(22) Anmeldetag: 10.02.2025
(51) Int. Cl.: C03C 3/097, C03C 10/00

(54) **TRANSPARENTE LITHIUMALUMINIUMSILIKAT-GLASKERAMIK**

(71) Anmelder: SCHOTT AG, 55122 Mainz (DE)
(72) Erfinder: REIFF, Lukas, 55122 Mainz (DE); IBE, Susanne, 55122 Mainz (DE); LANGER, Philipp, 55122 Mainz (DE)
(74) Vertreter: Schott Corporate IP

(57) **Zusammenfassung**

Die Erfindung betrifft eine transparente Lithiumaluminiumsilikat-Glaskeramik, sowie die Verwendung einer transparenten Lithiumaluminiumsilikat-Glaskeramik.

## Beschreibung

### Gebiet der Erfindung

Die Erfindung betrifft eine transparente Lithiumaluminiumsilikat-Glaskeramik, welche insbesondere für die Verwendung als Kochfläche in Kochgeräten, oder als Kaminsichtscheibe geeignet ist sowie deren Verwendung.

### Hintergrund der Erfindung

Glaskeramiken, insbesondere transparente Glaskeramiken sind seit vielen Jahren bekannt. Eine im Stand der Technik ebenfalls bekannte Variante einer solchen Glaskeramik stellen die Lithiumaluminiumsilikat (LAS)-Glaskeramiken dar, die entweder Hochquarz-Mischkristalle (HQMK) (auch als β-Eukryptit bekannt), insbesondere für transparente Materialien, oder Keatit-Mischkristalle (KMK) (auch als β-Spodumen bekannt), insbesondere für transluzente oder opake Materialien, als Hauptkristallphase enthalten. Zur Herstellung solcher Glaskeramiken werden zunächst in für die Glasherstellung üblichen Verfahren Ausgangsgläser, sogenannte Grüngläser, hergestellt. Diese Grüngläser werden durch eine thermische Behandlung, die Keramisierung, in Glaskeramiken umgewandelt. Auf diese Weise erzeugte transparente Glaskeramiken können in vielfältigen Bereichen Anwendung finden. Insbesondere werden solche Glaskeramiken als Kochflächen verwendet. Ferner finden derartige Glaskeramiken Verwendung als Sichtscheibe für Kaminöfen, Backöfen, als Arbeitsplatte oder als Sicherheitsglas.

Die für die Verwendung als Kochfläche wesentliche Eigenschaft dieser Materialien ist, dass sie über eine sehr geringe thermische Ausdehnung in einem Temperaturbereich von Raumtemperatur bis 700 °C verfügen. Die niedrige thermische Ausdehnung bewirkt ihrerseits eine hohe Temperaturwechselbeständigkeit. Die thermische Ausdehnung wird durch die Kombination von Kristallphasen mit negativer thermischer Ausdehnung und einer amorphen Restglasphase mit positiver thermischer Ausdehnung eingestellt. Bei den bisher verwendeten Glaskeramiken wird dafür ein Lithiumoxidanteil von üblicherweise mehr als 3,6 bis 5,0 Gew.-% verwendet.

Das zur Herstellung von LAS-Glaskeramiken verwendete Lithiumoxid wird üblicherweise in Form von Lithium-haltigen Mineralien bereitgestellt. Im Stand der Technik sind hierzu eine Reihe von Mineralien bekannt, die ausreichend hohe Gehalte an Lithium in Form von Li₂O in Verbindung mit weiteren Komponenten wie SiO₂ und Al₂O₃ aufweisen, wie beispielsweise Petalit oder Spodumen. Während das in diesen Mineralien enthaltene SiO₂ und Al₂O₃ für die Herstellung eines kristallisierbaren Glases erforderlich und mithin in einem zur Herstellung des Glases verwendeten Gemenge erwünscht ist, enthalten die verwendeten natürlichen Mineralien üblicherweise eine Reihe weiterer Komponenten, die ebenfalls bei Verwendung des Rohstoffs in die Glaszusammensetzung eingebracht werden.

Im Falle von Petalit ist hier insbesondere der Gehalt an Fe₂O₃ zur Herstellung einer möglichst farblosen transparenten Glaskeramik problematisch, da Fe₂O₃ aufgrund der Bildung von Fe/Ti-Farbkomplexen mit dem als Keimbildner in der Glaszusammensetzungen vorhandenen TiO₂ eine Einfärbung der Glaskeramik verursachen kann. Dies ist grade bei Verwendung einer solchen Glaskeramik als Kochfläche problematisch, da hier häufig farbige Unterseitenbeschichtungen auf den Kochflächen aufgebracht werden, sodass unter der Glaskeramik angeordnete Heizelemente und die zugehörige Elektronik von oberhalb der Glaskeramik nicht mehr sichtbar sind. Bei einer Einfärbung der Glaskeramikkochfläche aufgrund von unerwünschten Komponenten in der Glaszusammensetzung kann dabei eine unerwünschte Verfälschung der Farbwahrnehmung der Unterseitenbeschichtung auftreten. Gleichermaßen kann eine solche Einfärbung auch als störend wahrgenommen werden, wenn die Glaskeramik als Sichtscheibe, insbesondere Kaminsichtscheibe eingesetzt wird.

Beispielhaft wird an dieser Stelle auf die EP 3 872 043 A1 verwiesen, in der bereits die Problematik hoher Eisengehalte in technischen Gemengerohstoffen adressiert wird.

Aufgrund steigender Rohstoffpreise für Lithium ist es aus wirtschaftlichen Gründen hingegen vorteilhaft, wenn zur Herstellung der Glaskeramik auf eine breite Palette natürlicher Rohstoffe zurückgegriffen werden kann. Dabei ist üblicherweise ein Kostenvorteil der natürlichen Rohstoffe insbesondere dann gegeben, wenn diese vergleichsweise hohe Verunreinigungen aufweisen, also neben den erwünschten Komponenten Li₂O, SiO₂ und Al₂O₃ nicht vernachlässigbare Mengen weiterer Komponenten beinhalten, insbesondere in Form von Fe₂O₃.

Vor diesem Hintergrund besteht ein Bedarf an Lithiumaluminiumsilikat-Glaskeramiken, die weitgehend unempfindlich gegenüber Verfärbungen durch unerwünschte Verunreinigungen der verwendeten technischen Gemengerohstoffe sind. Gleichzeitig sollen derartige Glaskeramiken eine geringe Buntheit c* und einen niedrigen CTE aufweisen, sodass sie insbesondere zur Verwendung als Kochfläche geeignet sind.

Unter einer transparenten Glaskeramik wird vorliegend wie üblich eine Glaskeramik mit geringer Lichtstreuung verstanden. Die Transmission einer solchen transparenten Glaskeramik kann über absorbierende, also färbende, Bestandteile in einem weiten Bereich eingestellt werden.

### Aufgabe der Erfindung

Die Aufgabe der Erfindung besteht in der Bereitstellung einer transparenten Lithiumaluminiumsilikat-Glaskeramik, welche kostengünstig und bzgl. der verwendbaren technischen Gemengerohstoffe flexibel herstellbar ist, ohne dass dadurch Einschränkungen in den Gebrauchseigenschaften entstehen. Ferner soll die erfindungsgemäße Glaskeramik eine möglichst geringe Verfälschung einer Farbwahrnehmung durch die Glaskeramik aufweisen.

Die Glaskeramik soll insbesondere allen Anforderungen für den Gebrauch als Kochfläche mit allen Arten von Heizelementen genügen. Dazu zählen insbesondere Strahlungs-, Induktions- und Gasheizelemente. Dies erfordert insbesondere eine ausreichend hohe Temperaturwechselbeständigkeit als auch eine hohe Temperatur-Langzeitbeständigkeit.

### Zusammenfassung der Erfindung

Die Aufgabe der Erfindung wird gelöst durch den Gegenstand der unabhängigen Ansprüche. Bevorzugte Ausführungen und Weiterbildungen finden sich in den abhängigen Ansprüchen.

Die Erfindung betrifft eine transparente Lithiumaluminiumsilikat-Glaskeramik mit einem thermischen Ausdehnungskoeffizienten im Bereich von 20°C bis 700 °C von -0,5 bis 1,5 ppm/K, mit einem Lichttransmissionsgrad τᵥᵢₛ von mindestens 80% bezogen auf eine Dicke von 4 mm, einer Buntheit c* von weniger als 8, bezogen auf eine Dicke von 4 mm und mit einer Zusammensetzung enthaltend in Gew.-% auf Oxidbasis:

| | |
|---|---|
| SiO₂ | 60 - 70 |
| Al₂O₃ | 20 - 24 |
| Li₂O | 3,0 - 4,0 |
| CaO | 0 - 1,0 |
| BaO | 0,5 - 3,5 |
| MgO | 0,1 - 0,6 |
| ZnO | 1,0 - 3,0 |
| TiO2 | 1,5 - 3,0 |
| ZrO₂ | 1,5 - 2,5 |
| Fe₂O₃ | 0,03 - 0,12. |

Eine Glaskeramik mit einem entsprechenden thermischen Ausdehnungskoeffizienten weist sowohl eine hohe Temperaturwechselbeständigkeit als auch eine hohe thermische Langzeitstabilität auf. Dadurch ist sie für die Verwendung als Kochfläche mit allen Arten von Heizelementen geeignet. Der Ausdehnungskoeffizient beträgt wenigstens -0,5 ppm/K. Dabei bedeutet "ppm" "parts per million", also eine relative Größenänderung von 10⁻⁶ bei einer Temperaturänderung von 1 K. Negativere Werte der thermischen Ausdehnung werden vermieden. Bei einer negativen Ausdehnung, also einer Kontraktion, entstehen beim Aufheizen Zugspannungen in der Oberfläche der Glaskeramik. Eine thermische Ausdehnung von mehr als 1,5 ppm/K wird ebenfalls vermieden. Bei einer Ausdehnung von mehr als 1,5 ppm/K ist nicht sichergestellt, dass die Temperaturwechselbeständigkeit ausreichend hoch ist, um die Glaskeramik in Kochgeräten mit Strahlungsheizelementen einsetzen zu können.

Bezüglich der angegebenen optischen Eigenschaften hinsichtlich der Transmission und der Buntheit der erfindungsgemäßen Glaskeramik bedeutet "bezogen auf eine Dicke von 4 mm", dass die entsprechenden Eigenschaften entweder an einer Probe mit einer Materialstärke von 4 mm bestimmt werden oder bei einer anderen Materialstärke bestimmt und auf eine Materialstärke von 4 mm umgerechnet werden.

Die Buntheit C* wird gemäß der folgenden Formel aus den L*a*b*-Farbkoordinaten bestimmt: $C * = \sqrt{{\left(a*\right)}^{2} + {\left(b*\right)}^{2}} .$

Die Farbkoordinaten a* und b* werden in bekannter Weise aus dem Transmissionsspektrum der Glaskeramik unter Verwendung von Normlicht der Normlichtart D65 und einem 2°-Beobachter bestimmt.

Die Buntheit C* von weniger als 8, bevorzugt weniger als 7, besonders bevorzugt weniger als 6 bewirkt, dass die Farbe von Licht bei Durchtritt durch die Glaskeramik nur geringfügig verändert wird. Dies ist beispielsweise bei der Verwendung als Kochfläche oder Kaminsichtscheibe von besonderer Bedeutung.

Die Buntheit einer Glaskeramik macht sich beispielsweise dann besonders bemerkbar, wenn die Glaskeramik zur Verwendung als Kochfläche mit einer weißen Unterseitenbeschichtung versehen wird. Glaskeramiken in diesen Verwendungen sind häufig 4 mm dick. Licht, dass an einer rückseitigen Beschichtung reflektiert wird, durchläuft demnach eine optische Wegstrecke von 8 mm, so dass sich Farbverschiebungen durch eine Eigenfarbe der Glaskeramik stärker auswirken als bei kürzeren Wegstrecken. Für Kochflächen mit einer weißen Beschichtung auf der Rückseite ist eine entsprechend geringe Buntheit deshalb besonders vorteilhaft.

Ähnlich verhält es sich bei der Verwendung einer Glaskeramik als Kaminsichtscheibe. Auch in diesem Fall ist eine möglichst farbneutrale Transmission wünschenswert, da andernfalls die Flammenfarbe eines im Kamin brennenden Feuers verfälscht werden könnte. Zudem wird üblicherweise eine Sichtscheibe mit einem nicht hinreichend farbneutralen, insbesondere gelbstichigen Transmissionsverhalten als nicht ästhetisch wahrgenommen.

Die erfindungsgemäße Glaskeramik enthält die folgenden Bestandteile in Gew.-%:

| | |
|---|---|
| SiO₂ | 60 - 70, |
| Al₂O₃ | 20 - 24 und |
| Li₂O | 3,0 - 4,0. |

Die Komponenten SiO₂ und Al₂O₃ bilden in der Glaskeramik zusammen mit dem Li₂O die Hauptbestandteile der Kristallphase. Zugleich bestimmen sie wesentlich die Glasbildungseigenschaften sowie die Viskosität des Grünglases.

Der SiO₂-Gehalt der erfindungsgemäßen Glaskeramik soll maximal 70 Gew.-% betragen, weil diese Komponente die Viskosität des Glases, insbesondere den Verarbeitungspunkt, stark erhöht. Für gutes Einschmelzen der Gläser und für niedrige Formgebungstemperaturen sind höhere Gehalte von SiO₂ unwirtschaftlich. Bei sehr hohen SiO₂-Anteilen von mehr als 70 Gew.-% kann es bei der Keramisierung zur Bildung von Keatit kommen. Dies führt zu einer starken Erhöhung der thermischen Ausdehnung und zu einer Verschlechterung der optischen Eigenschaften des Materials, insbesondere in Form einer Trübung. Der Mindestgehalt an SiO₂ soll dabei 60 Gew.-% betragen, weil dies für die geforderten Eigenschaften, wie z. B. chemische Beständigkeit und Temperaturbelastbarkeit vorteilhaft ist.

Vorzugsweise enthält die Glaskeramik wenigstens 61 Gew.-%, besonders bevorzugt wenigstens 62 Gew.-%, ganz besonders bevorzugt wenigstens 63 Gew.-%, oder sogar wenigstens 64 Gew.-% SiO₂. Je mehr SiO₂ die Glaskeramik enthält, desto besser ist ihre Temperaturbelastbarkeit und chemische Beständigkeit. Weiterhin enthält sie vorzugsweise höchstens 69 Gew.-%, höchstens 68 Gew.-%, besonders bevorzugt höchstens 67 Gew.-%, oder sogar höchstens 66 Gew.-% SiO₂. Je weniger SiO₂ die Glaskeramik enthält, desto besser ist die Schmelzbarkeit und Verarbeitbarkeit des Grünglases in der Heißformgebung.

Der Gehalt an Al₂O₃ der erfindungsgemäßen Glaskeramik liegt im Bereich von 20 bis 24 Gew.-%. Ein höherer Al₂O₃-Anteil führt zu Problemen mit der Entglasung und der unerwünschten Bildung von Mullit. Deshalb sollen 24 Gew.-% nicht überschritten werden. Geringere Mengen als 20 Gew.-% an Al₂O₃ sind ungünstig für die Bildung der Hochquarz-Mischkristalle und fördern die Bildung unerwünschter Kristallphasen. Zudem hat sich gezeigt, dass sich geringe Gehalte an Al₂O₃ nachteilig auf die Buntheit der Glaskeramik auswirken.

Vorzugsweise enthält die Glaskeramik höchstens 23 Gew.-% Al₂O₃, besonders bevorzugt höchstens 22 Gew.-% Al₂O₃. Je weniger Al₂O₃ die Glaskeramik enthält, desto besser ist die Schmelzbarkeit und Verarbeitbarkeit des Grünglases in der Heißformgebung. Gleichzeitig kann es für die Bildung der Hochquarz-Mischkristalle vorteilhaft sein, wenn die Glaskeramik nach einer weiteren Ausführungsform wenigstens 21 Gew.-% Al₂O₃ enthält.

Der Gehalt an Li₂O der erfindungsgemäßen Glaskeramik liegt im Bereich 3,0 - 4,0 Gew.-%. Es hat sich gezeigt, dass mit einem Li₂O-Gehalt in diesem Bereich in Kombination mit den übrigen Bestandteilen in den genannten Grenzen eine Glaskeramik mit einer hohen Temperaturwechselbeständigkeit und guten Schmelzbarkeit erzielt werden kann. Da Li₂O einen starken Einfluss auf die thermische Ausdehnung der Glaskeramik hat, wird Li₂O in Kombination mit den übrigen Bestandteilen der erfindungsgemäßen Glaskeramik in den oben genannten Grenzen gewählt, um die für die Erfindung geforderte Temperaturwechselbeständigkeit erzielen zu können. Zusätzlich wirkt sich ein Anteil von mehr als 3,0 Gew.-% Li₂O positiv auf die Herstellbarkeit der Glaskeramik aus, da dies den elektrischen Widerstand der Glasschmelze reduziert, die Viskosität reduziert und dadurch auch den Verarbeitungspunkt absenkt. Durch eine reduzierte Viskosität der Glasschmelze kann auch die Effizienz der Läuterung verbessert werden. Eine verbesserte Läuterung führt zu weniger Produktionsausschuss aufgrund von Blasenbildung im Grünglas. Ferner reduziert Li₂O auch die Tendenz des Grünglases zur Entglasung.

Neben den beschriebenen Komponenten SiO₂, Al₂O₃ und Li₂O die im Wesentlichen die Kristallphase der Glaskeramik beeinflussen, enthält die erfindungsgemäße Glaskeramik ferner bis zu 1,0 Gew.-% CaO und 0,5 - 3,5 Gew.-% BaO.

Diese Komponenten beeinflussen im Wesentlichen die Schmelzeigenschaften des Grünglases, das als Vorläufermaterial zur Erzeugung der Glaskeramik aus dem Gemenge erschmolzen wird. Dabei kann CaO das Schmelzverhalten und insbesondere die Viskosität der Glasschmelze positiv beeinflussen, was vorteilhaft für die Verarbeitung des Glases im Zuge der Heißformgebung sein kann. Gleichzeitig kann BaO dazu beitragen, die Schmelztemperatur zu senken und wirkt sich üblicherweise ebenfalls vorteilhaft auf die Viskosität der Schmelze aus. Daher ist es insbesondere für die Herstellung des Grünglases vorteilhaft die Gehalte an CaO und BaO in den angegebenen Grenzen einzustellen.

Die erfindungsgemäße Glaskeramik enthält ferner 0,1 - 0,6 Gew.-% MgO. MgO ist in der Glaskeramik sowohl Bestandteil der kristallinen Phase als auch der Restglasphase und beeinflusst in der Glaskeramik die thermischen und mechanischen Eigenschaften der Glaskeramik. Dabei trägt MgO unter anderem zur Kristallisation bei und fördert hierbei die Bildung kristalliner Phasen in der Glaskeramik, was die Härte und Festigkeit der Glaskeramik positiv beeinflusst. Ferner kann MgO auch zur chemischen Widerstandsfähigkeit der Glaskeramik beitragen. Allerdings können hohe Gehalte an MgO auch nachteilig für einige Eigenschaften der Glaskeramik sein. So kann ein zu hoher Gehalt an MgO beispielsweise zur Bildung von Kristallen führen, die die Lichtstreuung in der Glaskeramik verstärken und mithin einen negativen Einfluss auf die Transparenz der Glaskeramik haben. Daher ist es vorteilhaft, den Gehalt an MgO innerhalb der beschriebenen Grenzen zu wählen.

Ähnlich wie MgO wird auch ZnO zum Teil in die kristalline Phase der Glaskeramik eingebaut, wobei ein Teil des ZnO auch in der Restglasphase verbleibt. Dabei hat ZnO unter anderem einen positiven Einfluss auf die Keramisierung des Grünglases und kann zu einer Verkürzung der Keramisierungszeiten zur Umwandlung des Grünglases in eine Glaskeramik beitragen. Zudem beeinflusst ZnO auch die thermische Ausdehnung der Glaskeramik, sowie deren optische Eigenschaften. Dabei hat es sich als vorteilhaft erwiesen, wenn der Gehalt an ZnO in dem beanspruchten Bereich von 1,2 bis 3,0 Gew.-% eingestellt wird.

Als Keimbildner zur Erzeugung von Kristallisationskeimen für die Keramisierung des Grünglases enthält die erfindungsgemäße Glaskeramik 1,5 bis 3,0 Gew.-% TiO₂ und 1,5 - 2,5 Gew.-% ZrO₂. Um eine hinreichende schnelle und effektive Keimbildung zu gewährleisten, ist es vorteilhaft, wenn sowohl TiO₂ als auch ZrO₂ jeweils in Gehalten von wenigstens 1,5 Gew.-% in der Glaskeramik vorhanden sind. Im Hinblick auf TiO₂ ist es jedoch vorteilhaft, wenn der Gehalt 3,0 Gew.-% nicht übersteigt, da sich höhere Gehalte an TiO₂ insbesondere bei hohen Gehalten an Fe₂O₃ als nachteilig für die Farbigkeit der Glaskeramik erwiesen haben. Dies ist im Wesentlichen auf die Bildung von Fe/Ti- Farbkomplexen zurückzuführen, die der Glaskeramik einen Gelbstich verleihen können. Zudem kann ein zu hoher Gehalt an TiO₂ eine Entglasung in der Heißformgebung des Grünglases begünstigen. Daher weist die Glaskeramik bevorzugt höchstens 2,8 Gew.-% TiO₂, besonders bevorzugt höchstens 2,6 Gew.-% TiO₂, ganz besonders bevorzugt höchstens 2,5 Gew.-% TiO₂ auf. Gleichzeitig kann die Keimbildung zur Herstellung der Glaskeramik verbessert werden, wenn die Glaskeramik wenigstens 1,8 Gew.-% TiO₂, bevorzugt wenigstens 2,0 Gew.-%, ganz besonders bevorzugt wenigstens 2,2 Gew.-% TiO₂ enthält.

Gleichermaßen ist es für die Keimbildung vorteilhaft, wenn die Glaskeramik wenigstens 1,6 Gew.-% ZrO₂, insbesondere wenigstens 1,7 Gew.-% ZrO₂, besonders bevorzugt wenigstens 1,8 Gew.-% ZrO₂ enthält. Allerdings sollte der Gehalt an ZrO₂ 2,5 Gew.-% nicht übersteigen, da sich dies nachteilig auf das Einschmelzverhalten des Grünglases auswirken kann. Zudem kann die ein zu hoher Gehalt an ZrO₂ zu einer Entglasung bei der Formgebung führen. Daher kann es nach einer Ausführungsform vorteilhaft sein, wenn die Glaskeramik höchstens 2,3 Gew.-%, bevorzugt höchstens 2,2 Gew.-%, besonders bevorzugt 2,1 Gew.-% und ganz besonders bevorzugt 2,0 Gew.-% ZrO₂ enthält.

Wie zuvor bereits ausgeführt wurde, kann je nach verwendetem Rohstoff zur Bereitstellung der gewünschten Mengen an Li₂O der als Verunreinigung eingeschleppte Gehalt an Fe₂O₃ stark variieren, es hat sich jedoch gezeigt, dass mit dem zuvor beschriebenen Glassystem für eine breite Spanne von Gehalten an Fe₂O₃ von 300 ppm bis 1200 ppm weiterhin eine Glaskeramik mit geringer Buntheit und hoher Transmission bereitgestellt werden kann. Bevorzugt weist dabei die Glaskeramik höchstens 1100 ppm Fe₂O₃, besonders bevorzugt höchstens 1000 ppm Fe₂O₃, ganz besonders bevorzugt höchstens 900 ppm Fe₂O₃, oder sogar höchstens 800 ppm Fe₂O₃ auf. Eine besonders hohe Flexibilität bzgl. der verwendeten Li₂O-Quelle ergibt sich aber wenn die Glaskeramik nach einer Ausführungsform wenigstens 400 ppm, insbesondere wenigstens 500 ppm Fe₂O₃ enthält.

In einer bevorzugten Ausführungsform enthält die Glaskeramik Hochquarz-Mischkristalle als Hauptkristallphase. "Hauptkristallphase" bedeutet, dass die Glaskeramik in Volumenanteilen mehr Hochquarz-Mischkristall als Keatit-Mischkristall und andere Kristallphasen enthält. In einer Weiterbildung dieser Ausführungsform enthält die Glaskeramik > 60 Vol.-%, bevorzugt >65 Vol.-% Hochquarz-Mischkristall. Die Angabe Vol.-% bezieht sich dabei auf das Volumen der Glaskeramik. Die Volumenanteile werden mittels Rietveld-Analyse aus Röntgenbeugungsspektren bestimmt.

Nach einer bevorzugten Ausführungsform ist dabei ferner vorgesehen, dass die Glaskeramik weniger als 0,6 Gew.-%, insbesondere weniger als 0,5 Gew.-% Na₂O, oder sogar weniger als 0,2 Gew.-% NaO₂ enthält, was sich vorteilhaft auf die Transmission und Farbigkeit der Glaskeramik auswirkt. Dies ist insbesondere bei hohen Gehalten an Fe₂O₃ der Fall, da Na₂O mit Farbstoffionen wie bspw. Fe₂O₃ reagieren kann, die in der Glaskeramik enthalten sind. Dies kann dazu führen, dass sich das Absorptionsverhalten der Glaskeramik verändert, da durch das Na₂O Redoxreaktionen mit solchen Farbstoffionen auftreten können, die deren Oxidationszustände und mithin ihr spektrales Absorptionsverhalten verändern. Ferner kann Na₂O auch die Kristallisation beeinflussen, was zur Bildung feiner Kristalle führen kann, die die Lichtstreuung in der Glaskeramik beeinflussen.

Wie zuvor ausgeführt, kann es aus Kostengründen vorteilhaft sein, den Gehalt an Li₂O in der Glaskeramik zu reduzieren. Gleichzeitig führt eine Reduzierung des Gehalts an Li₂O in der Glaskeramik bei Verwendung von Rohstoffen wie bspw. Petalit als Quelle für Li₂O automatisch auch zu einer Reduzierung des Gehalts an Fe₂O₃ in der Glaskeramik, was der Farbigkeit der Glaskeramik zugutekommt. Daher ist nach einer weiteren Ausführungsform vorgesehen, dass die Glaskeramik weniger als 3,5 Gew.-% Li₂O, bevorzugt weniger als 3,4 Gew.-%, besonders bevorzugt weniger als 3,3 Gew.-%, ganz besonders bevorzugt weniger als 3,2 Gew.-% Li₂O oder sogar weniger als 3,1 Gew.-% Li₂O enthält.

Nach einer weiteren Ausführungsform ist ferner vorgesehen, dass die Glaskeramik mehr als 0,25 Gew.-% CaO enthält. Der Gehalt an CaO kann dabei helfen, die obere Entglasungstemperatur des Vorläuferglases, das zur Keramisierung vorgesehen ist, zu verbessern. Auf diesem Weg kann eine unerwünschte Bildung von Kristallen im Glas im Zuge der Nachverarbeitung, insbesondere der Heißformgebung vermieden werden. Gleichzeitig ist es jedoch auch vorteilhaft, wen der Gehalt an CaO nach oben begrenzt wird, da CaO in der Glaskeramik zum einen zur Streuung von einfallendem Licht beiträgt und mithin die Transmission der Glaskeramik negativ beeinflussen kann. Ferner kann ein zu hoher Gehalt an CaO auch zu einer Färbung der Glaskeramik beitragen. Daher ist nach einer weiteren Ausführungsform ferner vorgesehen, dass die Glaskeramik höchstens 0,6 Gew.-% CaO, bevorzugt höchstens 0,5 Gew.-% CaO enthält.

Ein weiterer Hebel zur Verbesserung der Farbigkeit einer Glaskeramik hin und zu einer möglichst farbneutralen Glaskeramik besteht in dem Gehalt an MgO. In der Glaskeramik ist MgO, wie zuvor bereits ausgeführt, sowohl Bestandteil der Mischkristalle in der Glaskeramik als auch der Restglasphase und hat einen Einfluss auf eine Vielzahl der Eigenschaften der Glaskeramik. Eine Absenkung des Gehalts an MgO kann dabei insbesondere vorteilhaft sein, da so die thermische Ausdehnung der Glaskeramik reduziert werden kann. Gleichzeitig wirkt sich eine Reduzierung des Gehalts an MgO auch positiv auf die Farbigkeit der Glaskeramik hin zu einer möglichst farbneutralen Transmission hin aus, da MgO die Bildung von Fe/Ti-Farbkomplexen begünstigen kann. Daher ist nach einer weiteren Ausführungsform vorgesehen, dass die Glaskeramik weniger als 0,4 Gew.-% MgO enthält. Gleichzeitig ist MgO jedoch auch vorteilhaft für die Schmelz- und Verarbeitungstemperatur des Glases, kommt also der Wirtschaftlichkeit in der Herstellung des Glases zugute. Daher ist weiter bevorzugt vorgesehen, dass die Glaskeramik wenigstens 0,1 Gew.-% MgO, insbesondere wenigstens 0,2 Gew.-% MgO enthält.

Eine weitere Komponente in der Glaskeramik, die sich vorteilhaft auf das Transmissionsverhalten der Glaskeramik auswirken kann, ist BaO. Ein erhöhter Anteil an BaO reduziert die Tendenz der Glaskeramik zur Streuung von einfallendem Licht, da der Brechwert der Restglasphase bei gleichen Kristallitgrößen mit der Zugabe von BaO an den Brechwert der kristallinen Phase der Glaskeramik angeglichen werden kann. Ferner begünstigt ein erhöhter Gehalt an BaO eine Absenkung des Verarbeitungspunktes des Vorläuferglases durch Absenkung der Viskosität der Glasschmelze. Daher ist nach einer Ausführungsform vorgesehen, dass die Glaskeramik mehr als 1,5 Gew.-% BaO, insbesondere mehr als 2,0 Gew.-% BaO, besonders bevorzugt mehr als 2,2 Gew.-% BaO, oder sogar mehr als 2,5 Gew.-% BaO enthält. Dies hat sich insbesondere in Verbindung mit hohen Gehalten an ZnO von mehr als 1,5 Gew.-% als vorteilhaft erwiesen. Bei Gehalten an ZnO von mehr als 2,5 Gew.-% kann es nach einer weiteren Ausführungsform sogar vorteilhaft sein, wenn die Glaskeramik mehr als 2,8 Gew.-% BaO enthält.

Abhängig von der weiteren Zusammensetzung der Glaskeramik kann es jedoch auch vorteilhaft sein, den Gehalt an BaO auf geringere Werte zu begrenzen. Daher ist nach einer hierzu alternativen Ausführungsform vorgesehen, dass die Glaskeramik weniger als 1,2 Gew.-% BaO enthält. Dies liegt darin begründet, dass zu hohe Gehalte an BaO je nach verwendetem Glassystem zu einem Ausfällen von Barium-haltigen Kristallen führen können. Dies beeinträchtigt das Entglasungsverhalten und kann die mechanische Stabilität der Glaskeramik negativ beeinflussen.

Ähnlich wie BaO kann auch ein erhöhter Gehalt an ZnO zu einer Absenkung der Verarbeitungspunktes und zu einer Erniedrigung der Schmelztemperatur des Glases führen. Gleichzeitig führt ZnO zu einer Verringerung der thermischen Ausdehnung der Glaskeramik, was bei einer Erhöhung des Gehalts an ZnO gleichzeitig eine Reduzierung des Gehalts an Li₂O und mithin bei Verwendung von natürlichen Mineralien als Li₂O Quelle eine Reduzierung von als Verunreinigung eingeschlepptem Fe₂O₃ ermöglicht. Folglich kann durch eine Erhöhung des Gehalts an ZnO bereits durch eine gleichzeitige Absenkung des Gehalts an Li₂O die Farbigkeit der Glaskeramik verbessert werden. Eine Erhöhung des Gehalts an ZnO ist zudem vorteilhaft, da ZnO die Anisotropie der Hochquarz-Mischkristalle in der Glaskeramik, also die Unterschiede zwischen der a- und c-Achse der Kristalle vermindert. Auf diesem Weg kann die Doppelbrechung in den kristallen reduziert werden, was sich vorteilhaft auf die Transmissionseigenschaften der Glaskeramik auswirkt. Daher ist nach einer weiteren Ausführungsform vorgesehen, dass die Glaskeramik mehr als 1,5 Gew.-% ZnO, bevorzugt mehr als 2,0 Gew.-% ZnO enthält.

Eine weitere Komponente, die sich vorteilhaft auf die Farbigkeit einer transparenten LAS-Glaskeramik auswirken kann, ist Nd₂O₃, da Nd₂O₃ eine durch Fe/Ti-Farbkomplexe verursachte Einfärbung der Glaskeramik durch komplementäre Absorptionsbanden reduzieren kann. Daher ist nach einer weiteren Ausführungsform vorgesehen, dass die Glaskeramik wenigstens 300 ppm Nd₂O₃ enthält. Um eine zu starke Färbung durch Nd₂O₃ und auch aufgrund hoher Rohstoffkosten ist es jedoch vorteilhaft, den Gehalt an Nd₂O₃ auf höchstens 800 ppm, insbesondere höchstens 700 ppm zu begrenzen.

Zur Läuterung des Grünglases hat sich die Verwendung von As₂O₃ gegenüber SnO₂ als vorteilhaft erwiesen, da SnO₂ mit dem für die Keimbildung benötigten TiO₂ Absorptionsbanden für auf die Glaskeramik einfallendes Licht ausbilden kann, die zu einer Färbung der Glaskeramik in Form einer Rotverschiebung des transmittierten Lichts führen. Daher ist nach einer weiteren Ausführungsform vorgesehen, dass die Glaskeramik 0,1 - 1,1 Gew.-% As₂O₃ enthält. Bevorzugt werden dabei der Glaskeramik keine weiteren Läutermittel, insbesondere kein SnO₂, zugesetzt, sodass die Glaskeramik bevorzugt weniger als 1000 ppm SnO₂, besonders bevorzugt weniger als 800 ppm SnO₂, ganz besonders bevorzugt weniger als 600 ppm SnO₂ enthält. Eine Erhöhung des Gehalts an As₂O₃ kann dabei eine Verbesserung der Läuterung mit sich bringen, sodass der Gehalt an As₂O₃ bevorzugt wenigstens 0,3 Gew.-%, besonders bevorzugt wenigstens 0,5 Gew.-% beträgt. Gleichzeitig kann es vorteilhaft sein, den Gehalt an As₂O₃ auf höchstens 1,0 Gew.-%, bevorzugt höchstens 0,9 Gew.-% zu begrenzen.

Alternativ kann jedoch auch eine Läuterung mittels SnO₂ erfolgen, wobei in diesem Fall der Gehalt an SnO₂ in der Glaskeramik bevorzugt zwischen 0,05 und 0,3 Gew.-%, besonders bevorzugt 0,1 und 0,2 Gew.-% beträgt.

Bei Verwendung der erfindungsgemäßen Glaskeramik als Kochfläche ist neben der Farbigkeit der Gaskeramik insbesondere auch die thermische Beständigkeit des Materials von hoher Relevanz. Dabei kommt insbesondere der thermischen Ausdehnung der Glaskeramik, ausgedrückt durch den thermischen Ausdehnungskoeffizienten (CTE) eine hohe Bedeutung zu. Um zu vermeiden, dass der CTE der Glaskeramik für die Verwendung als Kochfläche problematische Werte des annimmt, ist es nach einer Ausführungsform vorgesehen, dass die Summe der Komponenten Na₂O, K₂O und MgO einen Gesamtgehalt an 1,6 Gew.-% nicht übersteigt. Bevorzugt beträgt die Summe der Komponenten Na₂O, K₂O und MgO höchstens 1,5 Gew.-%, besonders bevorzugt höchstens 1,3 Gew.-%, ganz besonders bevorzugt höchstens 1,0 Gew.-%, oder sogar höchstens 0,8 Gew.-%.

Neben Fe₂O₃ werden durch die zur Herstellung der Glaskeramik verwendeten Rohstoffe mitunter weitere Verunreinigungen in die Glaskeramik eingebracht. Dabei ist es nach Ausführungsformen vorgesehen, dass die Glaskeramik zwischen 100 und 400 ppm HfO₂ enthält. HfO₂ kann dabei insbesondere als Verunreinigung bei Rohstoffen zur Bereitstellung des benötigten Gehalts an ZrO₂ in Form von Zirkonerz vorliegen. Es hat sich jedoch gezeigt, dass mit der erfindungsgemäßen Zusammensetzung auch ein Gehalt an HfO₂ von bis zu 400 ppm tolerierbar ist, sodass auch hinsichtlich des verwendeten Rohstoffs zur Bereitstellung des Gehalts an ZrO₂ eine erhöhte Flexibilität gewährleistet ist.

Nach einer weiteren Ausführungsform kann dabei vorgesehen sein, dass die Glaskeramik bis 1,5 Gew.-% P₂O₅ enthält, bevorzugt, bis zu 1,3 Gew.-%. P₂O₅ fungiert in der Glaskeramik dabei im Allgemeinen als Netzwerkbildner, wobei die konkrete Funktion von P₂O₅ von den Gehalten der übrigen Komponenten abhängig ist. Die Hinzugabe von P₂O₅ kann sich dabei vorteilhaft auf die Schmelzeigenschaften des Grünglases auswirken, da P₂O₅ zu einer Absenkung der Viskosität der Schmelze beitragen kann, insbesondere wenn in der Glaskeramik ein Überschuss an Al₂O₃ vorliegt. Ferner kann P₂O₅ auch die Keimbildung im Zuge der Keramisierung des Grünglases unterstützen. Zudem kann insbesondere bei einer Ti-Zr-Keimbildung der CTE und die chemische Beständigkeit einer Glaskeramik durch Zugabe von P₂O₅ verbessert werden.

Es wird an dieser Stelle darauf hingewiesen, dass im Rahmen der vorliegenden Offenbarung die Komponenten des Glases in der Form angegeben werden, wie sie üblicherweise mittels Analyse erhalten werden. Dabei wird üblicherweise die Komponente in der stabilen, zumeist in der höchsten, Oxidationsstufe angegeben. Es wird allerdings darauf hingewiesen, dass dies nicht zwingend der Form entspricht, in welcher die Komponente auch tatsächlich vorliegt.

Beispielsweise kann das Eisen in einem oxidischen Glas sowohl zweiwertig als auch dreiwertig vorliegen, also als Fe²⁺ bzw. FeO oder als Fe³⁺ bzw. als Fe₂O₃. Die Angaben zu den Gehalten entsprechender Komponenten im Rahmen der vorliegenden Offenbarung beziehen sich also auf übliche Angaben der Analyse, wobei allerdings verstanden wird, dass die Komponente auch in von der "idealen", üblicherweise angegebenen Oxidationsstufe abweichender Form vorliegen kann.

In einer bevorzugten Ausführungsform ist ferner vorgesehen, dass die transparente Lithiumaluminiumsilikat-Glaskeramik in der Hochquarz-Mischkristallphase eine Kristallitgröße von weniger als 80 nm, bevorzugt weniger als 70 nm, besonders bevorzugt weniger als 60 nm und ganz besonders bevorzugt weniger als 50 nm aufweist. Die Kristallitgröße hat dabei direkten Einfluss auf die optischen Eigenschaften der Glaskeramik. So führt eine zu große Kristallitgröße zu einer verstärkten Lichtstreuung in der Glaskeramik, die sich als Trübung der Glaskeramik zeigt.

In einem weiteren Aspekt betrifft die Erfindung die Verwendung einer Glaskeramik wie sie zuvor beschrieben wurde als Kochfläche, Kaminsichtscheibe, Grill- oder Bratfläche, Abdeckung von Brennelementen in Gasgrills, Backofensichtscheibe, insbesondere für Pyrolyseherde, Arbeits- oder Tischplatten in Küchen oder Laboren, Abdeckung für Beleuchtungsvorrichtungen, in Brandschutzverglasungen und als Sicherheitsglas, optional im Laminatverbund, als Trägerplatte oder als Ofenauskleidung in thermischen Prozessen oder als rückseitige Abdeckung für mobile elektronische Geräte.

Die erfindungsgemäße Glaskeramik kann insbesondere als Kochfläche eingesetzt werden. Die Kochfläche kann dabei an der Oberseite und/oder der Unterseite ganz oder teilweise mit einem Dekor oder einer funktionellen Beschichtung versehen sein. Ebenso können auf der Unterseite Berührungssensoren zur Bedienung der Kochfläche vorgesehen sein. Dies können beispielsweise aufgedruckte, aufgeklebte oder angedrückte kapazitive Sensoren sein.

Im Folgenden wird die Erfindung anhand von Ausführungsbeispielen weiter veranschaulicht.

Die kristallisierbaren Grüngläser der Ausführungsbeispiele wurden aus in der Glasindustrie üblichen technischen Gemengerohstoffen bei Temperaturen von 1680 °C, 4 Stunden eingeschmolzen. Mit der Wahl solcher Rohstoffe lassen sich die Forderungen nach wirtschaftlichen Rohstoffen und einem geringen Verunreinigungsgehalt an unerwünschten Verunreinigungen vereinbaren. Nach dem Einschmelzen des Gemenges in Tiegeln aus gesintertem Kieselglas wurden die Schmelzen in Pt/Rh-Tiegel mit Innentiegel aus Kieselglas umgegossen und bei Temperaturen von 1640 °C, 60 Minuten durch Rühren homogenisiert. Nach dieser Homogenisierung wurden die Gläser für 3,5 Stunden bei 1680 °C geläutert. Anschließend wurden Stücke von ca. 120 × 120 × 30 mm³ Größe gegossen und in einem Kühlofen beginnend, abhängig von der jeweiligen Viskosität des Glases, ab 650-670 °C mit 30 K/h auf Raumtemperatur abgekühlt, um Spannungen abzubauen. Die Gussstücke wurden in die für die Untersuchungen und für die Keramisierung benötigten Größen unterteilt.

Die Keramisierung der Proben im Grünglaszustand ist mit einem Keramisierungsverfahren mit den folgenden Schritten erfolgt:
a) Aufheizen von Raumtemperatur auf 680 °C bis 760 °C innerhalb von 3 bis 60 Minuten,
b) Temperaturerhöhung des kristallisierbaren Grünglases auf den Temperaturbereich der Keimbildung Tₐ bis 800 °C über einen Zeitraum von 10 bis 100 Minuten,
c) Temperaturerhöhung des Kristallisationskeime enthaltenden Glases innerhalb von 5 bis 80 Minuten in den Temperaturbereich hoher Kristallwachstumsgeschwindigkeit von 810 °C bis 930 °C,
d) Halten der Temperatur bei 810 bis 930 °C für 2 bis 60 min.,
e) Abkühlen auf Raumtemperatur innerhalb weniger als 150 Minuten.

Die nachfolgenden Tabellen enthalten die Zusammensetzung und Materialeigenschaften der erfindungsgemäßen Beispiele.

Der thermische Ausdehnungskoeffizient CTE wurde dabei mittels eines Verfahrens ermittelt, das sich im Wesentlichen an der DIN ISO 7991 von 1998 orientiert.

Zur Messung der oberen Entglasungstemperatur (OEG) wurden die Grüngläser in Pt/Rh10-Tiegeln geschmolzen. Anschließend wurden die Tiegel für 5 Stunden bei verschieden Temperaturen im Bereich der Verarbeitungstemperatur gehalten. Die oberste Temperatur, bei der die ersten Kristalle an der Kontaktfläche der Glasschmelze zur Tiegelwand auftreten, bestimmt die OEG.

Der Verarbeitungspunkt (T₄) der Grüngläser wurde mit einem Rührviskosimeter gemäß DIN ISO 7884-2 bestimmt.

T_{g} gibt die Transformationstemperatur, auch als Glasübergangstemperatur bekannt, der Grüngläser an. Sie wird dilatometrisch bestimmt.

Der Lichttransmissionsgrad τᵥᵢₛ wird im Wellenlängenbereich 380-780 nm unter Verwendung von Licht der Normlichtart D65 und einem 2°-Beobachter gemäß den Vorgaben von DIN 5033 bestimmt. Dieser Wert entspricht der Helligkeit Y im CIExyY-Farbraum. Der Wert ist ein Maß für das Helligkeitsempfinden des menschlichen Auges.

Die Farbkoordinaten im CIExyY-Farbraum und im CIELab-Farbraum wurden gemäß den Vorgaben der CIE 1932 mit einem 2° Beobachter und Licht der Normlichtart D65 in Transmission bestimmt.

Alle Transmissionsmessungen wurden an 4 mm dicken, beidseitig glatten Proben durchgeführt.

Der Volumenanteil "HQMK Phasengehalt" und die Kristallitgröße der kristallinen Phase "HQMK Kristallitgröße" wurden mittels Rietveld-Analyse aus Röntgenbeugungsspektren bestimmt.

**Tabelle 1: Zusammensetzungen beispielhafter Glaskeramiken in Gew.-% auf Oxidbasis**

| Bsp. Nr | 1 | 2 | 3 | 4 | 5 | 6 | 7 |
|---|---|---|---|---|---|---|---|
| SiO₂ | 65,01 | 64,87 | 64,35 | 66,02 | 65,49 | 64,51 | 64,56 |
| Al₂O₃ | 21,77 | 21,77 | 22,30 | 21,41 | 21,85 | 21,11 | 21,64 |
| Li₂O | 3,63 | 3,42 | 3,45 | 3,44 | 3,41 | 3,21 | 3,22 |
| Na₂O | 0,65 | 0,64 | 0,63 | 0,36 | 0,64 | 0,11 | 0,11 |
| K₂O | 0,11 | 0,10 | 0,10 | 0,36 | 0,19 | 0,23 | 0,22 |
| MgO | 0,34 | 0,34 | 0,33 | 0,56 | 0,63 | 0,37 | 0,27 |
| CaO | 0,21 | 0,21 | 0,21 | 0,46 | 0,04 | 0,43 | 0,43 |
| SrO | 0,004 | 0,004 | 0,004 | 0,006 | 0,004 | 0,014 | 0,011 |
| BaO | 0,84 | 0,85 | 0,83 | 1,03 | 0,84 | 2,67 | 2,27 |
| ZnO | 1,07 | 1,57 | 1,51 | 1,74 | 1,72 | 2,39 | 2,37 |
| TiO₂ | 2,44 | 2,31 | 2,38 | 2,38 | 2,37 | 2,20 | 2,19 |
| ZrO₂ | 1,81 | 1,81 | 1,81 | 1,85 | 1,81 | 1,82 | 1,82 |
| P₂O₅ | 1,27 | 1,27 | 1,25 | 0,06 | 0,06 | 0,05 | 0,05 |
| As₂O₃ | 0,70 | 0,69 | 0,70 | | 0,73 | 0,72 | 0,68 |
| SnO₂ | | | | 0,127 | | | |
| Fe₂O₃ | 0,079 | 0,077 | 0,077 | 0,063 | 0,066 | 0,055 | 0,055 |
| Nd₂O₃ | | | | 0,056 | 0,068 | 0,053 | 0,053 |
| MnO₂ | 0,023 | 0,022 | 0,022 | 0,022 | 0,022 | 0,015 | 0,015 |
| HfO₂ | 0,035 | 0,034 | 0,034 | 0,034 | 0,034 | 0,033 | 0,033 |

**Fortsetzung Tabelle 1**

| Bsp. Nr | 8 | 9 | 10 | 11 | 12 | 13 | 14 |
|---|---|---|---|---|---|---|---|
| SiO₂ | 63,43 | 65,80 | 65,92 | 65,79 | 64,29 | | |
| Al₂O₃ | 22,60 | 21,37 | 21,14 | 21,50 | 21,15 | | |
| Li₂O | 3,30 | 3,48 | 3,41 | 3,39 | 3,06 | | |
| Na₂O | 0,14 | 0,15 | 0,44 | 0,40 | 0,34 | | |
| K₂O | 0,23 | 0,32 | 0,33 | 0,28 | 0,23 | | |
| MgO | 0,27 | 0,33 | 0,34 | 0,41 | 0,36 | | |
| CaO | 0,43 | 0,31 | 0,31 | 0,31 | 0,43 | | |
| SrO | 0,012 | 0,045 | 0,045 | 0,005 | 0,016 | | |
| BaO | 2,31 | 0,99 | 1,00 | 1,12 | 3,04 | | |
| ZnO | 2,34 | 2,08 | 1,85 | 1,77 | 2,69 | | |
| TiO₂ | 2,21 | 2,41 | 2,42 | 2,19 | 2,21 | | |
| ZrO₂ | 1,84 | 1,84 | 1,85 | 1,82 | 1,83 | | |
| P₂O₅ | 0,05 | 0,05 | 0,04 | 0,05 | 0,05 | | |
| As₂O₃ | 0,68 | 0,71 | 0,75 | 0,78 | | | |
| SnO₂ | | | | | 0,117 | | |
| Fe₂O₃ | 0,053 | 0,055 | 0,048 | 0,055 | 0,058 | | |
| Nd₂O₃ | 0,051 | | 0,054 | 0,064 | 0,052 | | |
| MnO₂ | 0,015 | 0,016 | 0,013 | 0,016 | 0,020 | | |
| HfO₂ | 0,033 | 0,034 | 0,035 | 0,034 | 0,033 | | |

**Tabelle 2: Materialeigenschaften der beispielhaften Glaskeramiken**

| Bsp. Nr. | | 1 | 2 | 3 | 4 | 5 | 6 |
|---|---|---|---|---|---|---|---|
| T_{g} | °C | 685 | 680 | 686 | 685 | 682 | 681 |
| T₄ | °C | | | | 1317 | | 1306 |
| OEG | °C | | | | | | 1280 |
| HQMK Phasengehalt | Vol% | 67 | 67 | 71 | 65 | 66 | 64 |
| HQMK Kristallitgröße | nm | 43 | 43 | 43 | 42 | 46 | 46 |
| CTE(20;700°C) | ppm/K | -0,16 | -0,16 | -0,09 | 0,03 | 0,12 | -0,08 |
| Tvis | % | 85,3 | 86,1 | 85,7 | 82,2 | 83,9 | 85,7 |
| L* | °C | 94,0 | 94,4 | 94,2 | 92,7 | 93,4 | 94,2 |
| a* | | -0,3 | -0,4 | -0,4 | 0,0 | -0,4 | -0,4 |
| b* | | 6,9 | 6,0 | 6,2 | 6,2 | 5,5 | 4,7 |
| C* | | 6,9 | 6,0 | 6,3 | 6,2 | 5,5 | 4,7 |

**Fortsetzung Tabelle 2**

| Bsp. Nr. | | 7 | 8 | 9 | 10 | 11 | 12 |
|---|---|---|---|---|---|---|---|
| T_{g} | °C | 687 | 684 | 685 | 682 | 683 | 685 |
| T₄ | °C | 1305 | | | | 1315 | 1309 |
| OEG | °C | 1265 | 1345 | | | 1285 | |
| HQMK Phasengehalt | Vol% | 66 | 63 | 67 | 66 | 67 | 60 |
| HQMK Kristallitgröße | nm | 43 | 42 | 42 | 44 | 44 | 44 |
| CTE(20;700°C) | ppm/K | -0,16 | -0,06 | -0,30 | -0,12 | -0,08 | 0,12 |
| Tvis | % | 85,8 | 84,6 | 86,2 | 85,0 | 85,2 | 82,8 |
| L* | | 94,2 | 93,7 | 94,4 | 93,9 | 94,0 | 92,9 |
| a* | | -0,4 | -0,5 | -0,3 | -0,4 | -0,4 | -0,1 |
| b* | | 4,3 | 5,4 | 6,0 | 5,1 | 4,4 | 6,0 |
| C* | | 4,4 | 5,4 | 6,0 | 5,1 | 4,5 | 6,0 |

## Patentansprüche

1. Transparente Lithiumaluminiumsilikat-Glaskeramik
mit einem thermischen Ausdehnungskoeffizienten im Bereich von 20°C bis 700 °C von -0,5 bis 1,5 ppm/K,
mit einem Lichttransmissionsgrad τᵥᵢₛ von mindestens 80% bezogen auf eine Dicke von 4 mm,
einer Buntheit c* von weniger als 8, bezogen auf eine Dicke von 4 mm und
mit einer Zusammensetzung enthaltend in Gew.-% auf Oxidbasis:
| | |
|---|---|
| SiO₂ | 60 - 70 |
| Al₂O₃ | 20 - 24 |
| Li₂O | 3,0 - 4,0 |
| CaO | 0 - 1,0 |
| BaO | 0,5 - 3,5 |
| MgO | 0,1 - 0,6 |
| ZnO | 1,0 - 3,0 |
| TiO₂ | 1,5 - 3,0 |
| ZrO₂ | 1,5 - 2,5 |
| Fe₂O₃ | 0,03 - 0,12. |

2. Transparente Lithiumaluminiumsilikat-Glaskeramik nach Anspruch 1,
**dadurch gekennzeichnet, dass** die Glaskeramik weniger als 0,6 Gew.-% Na₂O enthält.

3. Transparente Lithiumaluminiumsilikat-Glaskeramik nach Anspruch 1 oder 2, **dadurch gekennzeichnet, dass** die Glaskeramik weniger als 3,5 Gew.-% Li₂O.

4. Transparente Lithiumaluminiumsilikat-Glaskeramik nach einem der vorherigen Ansprüche, **dadurch gekennzeichnet, dass** die Glaskeramik mehr als 0,25 Gew.-% CaO enthält.

5. Transparente Lithiumaluminiumsilikat-Glaskeramik nach einem der vorherigen Ansprüche, **dadurch gekennzeichnet, dass** die Glaskeramik weniger als 0,4 Gew.-% MgO enthält.

6. Transparente Lithiumaluminiumsilikat-Glaskeramik nach einem der vorherigen Ansprüche, **dadurch gekennzeichnet, dass** die Glaskeramik weniger als 1,2 Gew.-% BaO enthält.

7. Transparente Lithiumaluminiumsilikat-Glaskeramik nach einem der vorherigen Ansprüche, **dadurch gekennzeichnet, dass** die Glaskeramik mehr als 1,2 Gew.-% ZnO enthält.

8. Transparente Lithiumaluminiumsilikat-Glaskeramik nach einem der vorherigen Ansprüche, **dadurch gekennzeichnet, dass** die Glaskeramik wenigstens 300 ppm Nd₂O₃ enthält.

9. Transparente Lithiumaluminiumsilikat-Glaskeramik nach einem der vorherigen Ansprüche, **dadurch gekennzeichnet, dass** die Summe der Komponenten Na₂O + K₂O + MgO < 1,6 Gew.-% beträgt.

10. Transparente Lithiumaluminiumsilikat-Glaskeramik nach einem der vorherigen Ansprüche, **dadurch gekennzeichnet, dass** die Glaskeramik 0,1 - 1,1 Gew.-% As₂O₃ enthält.

11. Transparente Lithiumaluminiumsilikat-Glaskeramik nach einem der vorherigen Ansprüche, **dadurch gekennzeichnet, dass** die Glaskeramik zwischen 100 und 400 ppm HfO₂ enthält.

12. Verwendung einer Glaskeramik nach einem der vorhergehenden Ansprüche als Kochfläche, Kaminsichtscheibe, Grill- oder Bratfläche, Abdeckung von Brennelementen in Gasgrills, Backofensichtscheibe, insbesondere für Pyrolyseherde, Arbeits- oder Tischplatten in Küchen oder Laboren, Abdeckung für Beleuchtungsvorrichtungen, in Brandschutzverglasungen und als Sicherheitsglas, optional im Laminatverbund, als Trägerplatte oder als Ofenauskleidung in thermischen Prozessen oder als rückseitige Abdeckung für mobile elektronische Geräte.
